# EUROPEAN PATENT APPLICATION

(11) **EP 4 249 344 A1**
(43) Date of publication of application: **27.09.2023**
(21) Application number: 23163183.9
(22) Date of filing: 21.03.2023
(51) Int. Cl.: B61L 3/00, B61L 27/14

(54) **TRAIN OPERABLE IN HYBRID AND BATTERY-ONLY MODES**

(30) Priority: 23.03.2022 GB 202204081
(71) Applicant: Hitachi Rail Limited, London EC4M 7AW (GB)
(72) Inventor: DAUTEL, Christopher, London, EC1N 2PB (GB)
(74) Representative: Mewburn Ellis LLP

(57) **Abstract**

A train for travelling on a railway network including routes with external power supply infrastructure and on routes without external power supply infrastructure. The train includes a control system configured to operate a drive system of the train in each of two power modes: a hybrid mode in which power is drawn from an on-board generator assisted by one or more on-board electrical storage systems, and a battery-only mode where power is drawn only from the one or more on-board electrical storage systems. The control system is configured to receive both: a driving setting selection, and an operator specified power mode selected from the two power modes, associated with a respective region of the railway network. Whilst the train is in the respective region the control system is configured: to modify one or more parameters associated with the operator specified power mode, or to change from or ignore the operator specified power mode, based on the driving setting selection.

## Description

### Related applications

The present application claims priority to, and the benefit of, GB2204081.0 filed 23 March 2022 (23/03/2023), the contents of which are incorporated herein by reference in their entirety.

### Field of the invention

The present invention relates to a train, and a method of operating a train.

### Background

Conventional bi-modal trains are configured to operate two different drive modes in which the train propulsion systems receive electrical power from two different configurations of power sources. The first, externally powered, drive mode is provided on electrified railway lines which have an external power supply infrastructure. The second, self-powered, drive mode is provided on non-electrified railway lines. The bi-mode train can cross to and from electrified and non-electrified sections of the railway lines by changing between their two available drive modes.

In the externally powered drive mode, the bi-mode trains receive electrical power from the external power supply infrastructure via external current collectors for example pantographs which connect to overhead lines (OHL) or shoe gear which connect to live rails on the railway tracks.

In the self-powered drive mode, bi-mode trains receive electrical power from on-board power sources. Conventionally, bi-mode trains comprise on-board generator units (GUs), such as diesel engine-powered electricity generators, which generate the electrical power.

When a bi-mode train changes between its externally powered drive mode and its self-powered drive mode the control system manages the handover of the propulsion systems according to Automatic Power Change Over (APCO) routines A' and B'. EP 2689983 A proposes an APCO for a bi-mode train transitioning from an externally powered drive mode, which uses OHLs, to a self-powered drive mode which uses GUs.

Other trains have a hybrid self-powered drive system comprising GUs assisted by on-board energy storage systems (OBESSs), such as batteries. On conventional hybrid trains, GUs are used as the main source of motive power. The GUs are typically assisted by the OBESSs when the train is accelerating. The OBESSs contribute to overall improvements in energy consumption by enabling regenerative braking in which kinetic energy of the train is converted into regenerated electrical power for subsequent re-use.

However, conventional hybrid trains require that the GUs remain active at all times to provide motive power for the train and to power auxiliary systems. This contributes to greenhouse gas emissions and noise pollution, despite receiving assistance from the OBESSs in acceleration phases.

It is also desirous to decrease greenhouse gas emissions and noise pollution in around, for example, train stations, residential areas, and cities whilst also allowing the driver to maintain the timetable and avoid congestion and delays.

### Summary

Accordingly, in a first aspect, embodiments of the invention provide a train for travelling on a railway network including routes with external power supply infrastructure and on routes without external power supply infrastructure, the train including a control system configured to operate a drive system of the train in each of two power modes:
a hybrid mode in which power is drawn from an on-board generator assisted by one or more on-board electrical storage systems, and
a battery-only mode where power is drawn only from the one or more on-board electrical storage systems,
wherein the control system is configured to receive both:
   a driving setting selection, and
   an operator specified power mode selected from the two power modes, associated with a respective region of the railway network ,
and whilst the train is in the respective region the control system is configured to modify one or more parameters associated with the operator specified power mode, or to change from or ignore the operator specified power mode, based on the driving setting selection.

Such a train can operate in a more environmental friendly manner, for example running on battery-only mode when possible but whilst also retaining the flexibility desired to mitigate against delays. Notably, as the battery-only mode may not provide as much power to the drive system, it is advantageous for the driver to be able to override this power mode when needed.

The invention includes the combination of the aspects and preferred features described except where such a combination is clearly impermissible or expressly avoided.

Whilst the train is in the respective region, the control system may be configured:
in response to receiving a normal driving setting selection, to operate the drive system according to the operator specified power mode;
in response to receiving an economical driving setting selection, to increase the size of the respective region when the operator specified power mode is the battery-only mode; and
in response to receiving a fast driving setting selection, to reduce the size of the respective region when the operator specified power mode is the battery-only mode.

The control system may be configured to receive further driving setting selections, and take different actions in line of the further driving setting selections. For example, the driving setting selection may be a semi-fast driving setting selection where the size of the respective region is only reduced around predetermined points along the railway network (e.g. stations).

The control system may be configured to operate the drive system of the train in each of three power modes: the hybrid mode, the battery-only mode, and an over-head mode in which power is drawn from an electrified section of the railway network in which external power supply infrastructure is present. The operator specified power mode may therefore be selected from the three power modes. The control system may be configured to automatically operate the drive system of the train in each of the two or three power modes. That is, the control system may not await driver input, and instead it may transition between power modes without action from the driver.

The train may be a push-pull type train, that is the locomotive elements of the train (the railway vehicles including one or more traction motors) may be located near the front of the train, near the rear of the train, or both.

In response to receiving the economical driving setting selection, the control system may be configured to double the size of the respective region when the operator specified power mode is the battery-only mode.

In response to receiving the fast driving setting selection, the control system may be configured to reduce to zero the size of the respective region when the operator specified power mode is the battery-only mode. In other words, the fast driving setting selection may cause the controller to ignore the operator specified power mode when that power mode is battery-only mode or cause the drive system to operate in battery-only mode only when the train has arrived at a specific location (e.g. a station). The control system may therefore operate the drive system in the hybrid mode instead of the operator specified power mode.

The driving setting selection may be received from a driver of the train, for example through a human-machine interface. Alternatively, the driving setting selection may be received from an automatic operation system.

The control system of the train may include a database, the database containing data defining regions of the railway network in which the drive system should operate in a given operator specified power mode. The control system of the train may include a location determination module configured to determine the location of the train, and the control system is configured to look-up the location in the database to identify the given operator specified power mode. The control system may be configured to connect to a remote control centre and to receive, from the remote control centre, data defining further regions of the railway network in which the drive system should operate in a given operator specified power mode.

The train may include an antenna, configured to communicate with one or more beacons located along the railway network, and to derive from signals received from the or each beacon an operator specified power mode for a given region of the railway network. The signal(s) received from the or each beacon may include a beacon identifier, and the control system may be configured to look-up the received beacon identifier in a database to derive the operator specified power mode for the given region of the railway network. The signal(s) received from the or each beacon may include the operator specified power mode for the respective region of the railway network. Deriving the operator specified power mode from the or each beacon may include referencing the driving setting selection.

The control system may further include a driver assistance system, configured to provide operating data indicating an estimated schedule of the train to the driver calculated based on the driving setting selection. The driver assistance system may be configured to recommend a given driving setting selection to the driver based on the estimated schedule of the train.

The control system may further include a recording module, configured to store the driving setting selected by the driver of the train.

The control system may be configured to reset the driving setting selection when either:
the train is stopped at a station; or
the driver is changed.

In a second aspect, embodiments of the invention provide a method of operating a train on a railway network including routes with external power supply infrastructure and on routes without external power supply infrastructure, the train including a control system configured to operate a drive system of the train in each of two power modes:
a hybrid mode in which power is drawn from an on-board generator assisted by one or more on-board electrical storage systems, and
a battery-only mode where power is drawn only from the one or more on-board electrical storage systems,
the method including steps of:
receiving, by the control system both:
   a driving setting selection, and
   an operator specified power mode selected from the two power modes, associated with a respective region of the railway network ,
and, whilst the train is in the respective region the control system is configured to modify one or more parameters associated with the operator specified power mode, or to change from or ignore the operator specified power mode, based on the driving setting selection.

In response to receiving a normal driving setting selection, the control system may operating the drive system according to the operator specified power mode. In response to receiving an economical driving setting selection, the control system may increase the size of the respective region when the operator specified power mode is the battery-only mode. In response to receiving a fast driving setting selection, the control system may reduce the size of the respective region when the operator specified power mode is the battery-only mode

The control system may receive further driving setting selections, and take different actions in line of the further driving setting selections. For example, the driving setting selection may be a semi-fast driving setting selection where the size of the respective region is only reduced around predetermined points along the railway network (e.g. stations).

The control system may be operate the drive system of the train in each of three power modes: the hybrid mode, the battery-only mode, and an over-head mode in which power is drawn from an electrified section of the railway network in which external power supply infrastructure is present. The operator specified power mode may therefore be selected from the three power modes.

The method of the second aspect may include any one, or any combination insofar as they are compatible, of the optional features set out with reference to the first aspect.

Further aspects of the present invention provide: a computer program comprising code which, when run on a computer, causes the computer to perform the method of the second aspect; a computer readable medium storing a computer program comprising code which, when run on a computer, causes the computer to perform the method of the second aspect; and a computer system programmed to perform the method of the second aspect.

### Brief Description of the Drawings

Embodiments of the invention will now be described by way of example with reference to the accompanying drawings in which:
Figure 1 shows a schematic of a drive system for a train;
Figure 2 is a schematic diagram showing components of a control system of the train;
Figure 3A is a schematic diagram of a railway network illustrating the relationship between power mode and zone where zones are defined in a two-dimensional manner;
Figure 3B is a table describing the switchover pattern for a train traversing the railway network of Figure 3A;
Figures 4A and 4B are schematic diagrams of a railway network illustrating the relationship between power mode and zone where zones are defined in a one-dimensional manner;
Figure 5 is a flow diagram illustrating a method according to the present invention;
Figure 6 is a flow-diagram illustrating in more detail steps of the method of Figure 5;
Figure 7 is a schematic of a railway network illustrating the relationship between power mode and zone where the zones are defined by beacons installed along the railway network;
Figure 8 is a flow-diagram illustrating a variation of the method of Figure 6; and
Figure 9 is an example of an interface for the driver assistance system.

### Detailed Description and Further Optional Features

Aspects and embodiments of the present invention will now be discussed with reference to the accompanying figures. Further aspects and embodiments will be apparent to those skilled in the art. All documents mentioned in this text are incorporated herein by reference

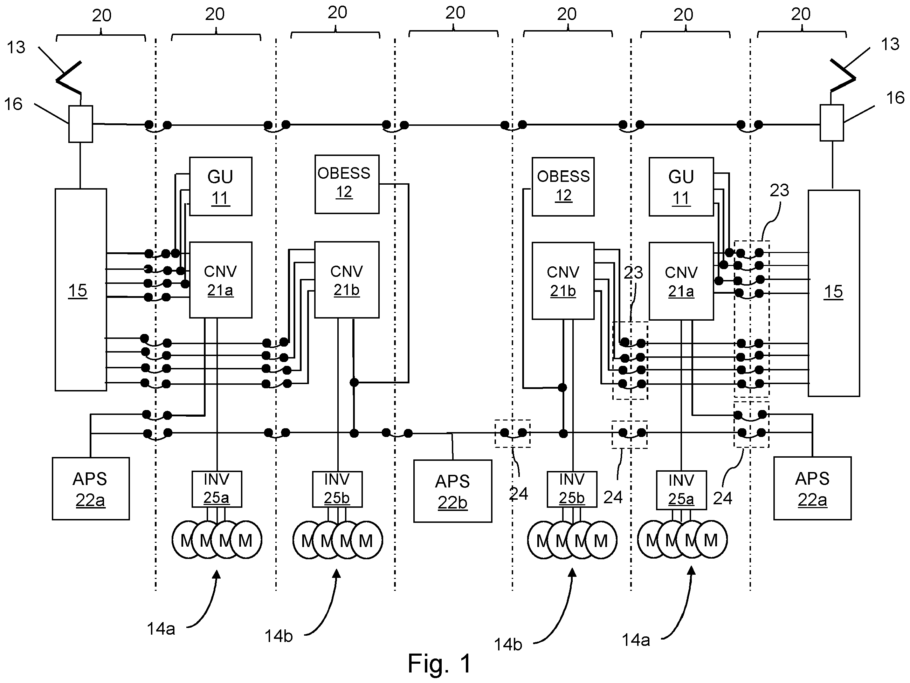

Figure 1 shows a schematic of the drive system for a train, sometimes referred to as a tri-mode train. The train is driven by traction motors 14a and 14b using electrical power provided by the external power supply infrastructure, or by generator units, Gus, 11 with optional support from the on-board energy storage systems, OBESSs, 12, or by the OBESSs alone according to the drive mode being provided by the control system.

External current collectors 13 are provided to connect to the external power supply infrastructure on electrified sections of the railway line. Typically, the external current collectors are roof-mounted pantographs, which are raised by the control system to connect to overhead lines (OHL) (not shown). However, they may be shoe gear provided beneath the train for connecting to live rails along the tracks. Main voltage transformers 15 are provided to adjust the voltage level between the external power supply infrastructure and the on-board systems. Vacuum circuit breakers (VCBs) 16, or similar, are provided to disconnect the pantographs from the main voltage transformers when they are not in use.

Typically, each GU 11 combines a diesel engine and an electricity generator powered by that engine to produce AC electrical power. However, other arrangements are possible. For example, the Gus could be fuel cells in which a fuel, such as hydrogen, is oxidised to generate DC electrical power. Each OBESS 12 is typically a battery system having an associated state of charge (SoC).

The train may comprise a series of coupled cars 20 in which, as shown in Figure 1, some cars contain respective Gus 11 and first traction motors 14a, and other cars contain respective OBESSs 12 and second traction motors 14b. Alternatively, the Gus and OBESSs may be housed in the same cars, along with their respective first and second traction motors.

Other cars are shown in Figure 1 which do not contain Gus or OBESSs, such as for example the lead and tail cars which typically carry the external current collectors 13 and house the main voltage transformers 15. Auxiliary power supply (APS) units 22a, 22b provided to power the train's auxiliary systems (i.e. power outlets, lights, doors, and air-conditioning systems etc.) may conveniently be located in cars without Gus and OBESSs.

First converter-inverter devices are provided on the cars with the Gus 11 and second converter-inverter devices are provided on the cars with the OBESSs 12. Each first converter-inverter device comprises a first converter circuit 21a and a first inverter circuit 25a joined to its converter circuit by a first DC link, the device providing three phase AC power from the first inverter circuit to drive respective first traction motors 14a. Similarly each second converter-inverter device comprises a second converter circuit 21b and a second inverter circuit 25b joined to its converter circuit by a second DC link, the device providing three phase AC power from the second inverter circuit to drive respective second traction motors 14b. The first and second converter circuits contain AC/DC converters to convert AC electrical power from the external current collectors 13 to DC electrical power. Moreover, in the case of the first converter circuits, these AC/DC converters can also convert AC electrical power from the Gus to DC electrical power. In the case of the second converter-inverter devices, the second DC-links can receive DC electrical power from the OBESSs.

Capacitors (not shown) help the first and second DC links to maintain constant DC voltages. When the DC links receive electrical power from the external current collectors 13 or the Gus 11 they are maintained at a first DC voltage and when DC links receive electrical power from the OBESSs 12 they are typically maintained at a second, different, DC voltage.

The control system manages the first 21a and second 21b converter circuits, and the first 14a and second 14b traction motors. Generally, the control system has a speed controller operable (e.g. by a driver) to select a target vehicle velocity which is converted into target torques for the traction motors. The control system adjusts the amount of electrical power supplied to the first and second traction motors to achieve the target vehicle velocity.

The APS units 22a, 22b receive DC electrical power from the first and second DC links, with the DC electrical power being conducted to neighbouring cars though inter-car DC electrical connectors 24. The control system can close such DC electrical connectors 24along connecting lines joining APS units as needed to enable sharing of DC electrical power between selected APS units, as discussed in more detail below. However, the control system can also open the DC electrical connectors 24 to electrically isolate the APS units from each other.

In the over-head mode, high voltage, single phase AC electrical power is obtained from the OHLs through the pantographs 13 and applied, via the closed VCBs 16, to the main voltage transformers 15. The resulting reduced voltage AC electrical power is supplied to the first 21a and second 21b converter circuits. The AC electrical power is conducted to neighbouring cars though inter-car AC electrical connectors 23. The AC electrical power is converted to DC electrical power in the first 21a and second 21b converter circuits. The DC electrical power is then conducted by the first and second DC links to the first 25a and second 25b inverter circuits which provide the three phase AC power required by the first 14a and second 14b traction motors. In this way the first and second traction motors can provide torque contributions using electrical power from the external power supply infrastructure. During this operation, the first and second DC links are maintained at the first DC voltage.

The OBESSs 12 may be fitted with DC choppers to step down the first DC voltage in order to enable charging of the OBESSs using electrical power from the OHLs. In this way the OBESSs can increase their SoC on electrified sections of the railway line. The OBESS may also be connected directly to the DC link(s).

Furthermore, when the train is actively braking, the control system may operate the first 14a and second 14b traction motors as generators to produce a negative torque contribution. The traction motors thus act as generators to convert kinetic energy of the train into regenerated electrical power. The regenerated electrical power can be fed back to the external power supply infrastructure via the inverter circuits 25a, 25b, the converter circuits 21a, 21b, the transformers 15 and the pantographs 13. However, another option is for the regenerated electrical power from the second traction motors, and optionally the first traction motors, to be stored in the OBESSs 12 to increase their SoC. Yet another option is for the regenerated electrical power from the first traction motors, and optionally the second traction motors, to be dissipated as heat in brake grid resistors (not shown).

When electrical power is applied to the DC links, step changes in voltage and capacitive loads can induce high in-rush currents. To avoid system damage by these high currents, first soft-charging circuits (not shown) can be provided between the main voltage transformers 15 and the converter circuits 21a, 21b to limit the current while the first and second DC links are being charged to achieve the first DC voltage. In particular, the control system can be configured to connect the main voltage transformers to the converter circuits using the first soft-charging circuits when switching from either of the self-powered drive modes to the externally powered drive mode, or when bringing the DC links to the first DC voltage at the beginning of train operation.

In the hybrid mode, electrical power is provided to the first traction motors 14a from the Gus 11. During acceleration phases electrical power is also provided to the second traction motors 14b from the OBESSs 12.

The main voltage transformers 15 are disconnected from the first 21a and second 21b converter circuits and the external current collectors are disconnected from the external power supply infrastructure, for example by lowering the pantographs 13. The VCBs 16 are also opened.

Three-phase AC electrical power generated by the Gus 11 is supplied to the first converter circuits 21a and converted to DC electrical power which is conducted in the first DC links. These are maintained at the first DC voltage. The first inverter circuits 25a invert the DC electrical power to three phase AC power to drive the train using the first traction motors 14a.

DC electrical power outputted by the OBESSs 12 is supplied to the second DC links, which are maintained at the second DC voltage. The DC electrical power is inverted by the second inverter circuits 25b to provide the three phase AC power required by the second traction motors14b.

Second soft-charging circuits may be provided between the OBESSs 12 and their second DC links to limit in-rush current when bringing the DC links to the second DC voltage. For example, the control system can connect the OBESSs to their DC links using the second soft-charging circuits when first charging the DC links to the second DC voltage at the beginning of train operation, or when switching from the externally powered drive mode to either of the self-powered drive modes.

DC electrical power can be provided to neighbouring cars that do not have Gus 11 or OBESSs 12 through the inter-car DC electrical connectors 24. The APSs 22a, 22b have their own inverters and transformers enabling them to receive power at either the first or second DC voltage. In particular, first APS units 22a connected to the first converter-inverter devices receive power at the first DC voltage, and are isolated from second APS units 22b connected to the second converter-inverter devices which receive power at the second DC voltage. Therefore, in the hybrid self-powered drive mode the first APS units 22a and the second APS units 22b receive power at different voltages. However, the transformers within the APS units allow the first and second APS units to provide the same voltage to the auxiliary systems regardless of their input power source.

In the hybrid self-powered drive mode, the control system adjusts the amount of electrical power generated by the Gus 11 and outputted by the OBESSs 12 to achieve target torques for the first 14a and second 14b traction motors. Typically the control system is configured to prioritise the generation of power from the Gus, with torque being mainly provided by the first traction motors. When the Gus and first traction motors are unable to achieve the target torques, the control system demands power from the OBESSs to provide additional torques from the second traction motors. This is most likely to happen during the acceleration phase of a journey when the Gus operate at full power. When the railway vehicle reaches the target velocity, the target torques are reduced and the control system reduces the power demanded from the OBESSs and then the Gus, and the vehicle enters a "cruising" state. If the target torques reduce further to zero (and there is no active braking of the vehicle), "cruising" becomes "coasting".

When active braking of the train is required, one braking option in the hybrid self-powered mode is for the control system to perform regenerative braking. In this case the second traction motors 14b operate as generators to produce a negative torque contribution. The second traction motors thus operate as generators, and kinetic energy of the railway vehicle is converted into regenerated electrical power which is used to charge the OBESSs 12. In this way, the OBESSs can improve fuel consumption by using the regenerated power to provide support to the Gus 11 during acceleration.

However, the diesel engines of Gus 11 of trains operating in the hybrid self-powered drive mode still consume fuel and generate carbon dioxide emissions because the Gus are always running in this mode. In particular, combustion engines consume fuel and produce emissions even when idling. However, the third OBESS-only drive mode enables the Gus to be disabled, reducing overall fuel consumption and emissions for a journey.

Moreover, in the hybrid self-powered drive mode the first DC links and second DC links are operated at the first and second DC voltages and are thus electrically isolated from each other. Therefore, only regenerative power from generator operation of the second traction motors 14b and inverter circuits 25b can be used to charge the OBESSs. Regenerated power from generator operation of the second traction motors 14a and inverter circuits 25a associated with the Gus can be dissipated in brake grid resistors.

In the battery-only mode, the control system disables the Gus 11 and electrical power is provided to the first 14a and second 14b traction motors from the OBESSs 12 alone. Thus, the combustion engines can be powered off, saving fuel and reducing emissions.

DC electrical power outputted by the OBESSs 12 is supplied to the second DC links. These links are therefore maintained at the second DC voltage. The control system brings the second DC links to the second DC voltage using the second soft-charging circuits as part of switching from the externally powered drive mode to the OBESS-only drive mode. The second inverter circuits 25b invert the DC electrical power to three phase AC power to drive the train using the second traction motors 14b.

The control system can perform regenerative braking in which the second traction motors 14b operate as generators to produce a negative torque contribution. The second traction motors thus operate as generators, and kinetic energy of the railway vehicle is converted into regenerated electrical power which is used to charge the OBESSs 12. Similarly, the first traction motors 14a may be operated as generators to perform regenerative braking and increase the state of charge of the OBESSs.

In addition, the control system is configured to close inter-car DC electrical connectors 24along the connecting lines joining the first 22a and second 22b APS units. Thus DC electrical power outputted by a given OBESSs 12 can be shared across more than one APS unit. Accordingly, all the APS units connected in this way are configured to power the auxiliary systems using DC electrical power provided at the second DC voltage. Advantageously, this arrangement allows the Gus 11 to be shut down completely while still ensuring power is provided to all the APS units and essential systems.

Furthermore, the drive system is configured such that electrical power outputted by the OBESSs 12 can be used to drive the first traction motors 14a. Advantageously, this allows the same motive power to be achieved in the OBESS-only drive mode as in the externally powered and hybrid self-powered drive modes. Moreover, the connection of the OBESSs to the first traction motors allows generator operation of the first traction motors and the first inverter circuits 25a to be used to charge the OBESSs during regenerative braking. This arrangement enables more kinetic energy of the train to be recovered during braking and reused by the OBESSs.

For example, in one arrangement, the control system is configured so that the second DC links provide DC electrical power to the first DC links via closure of internal APS contactors of the first APS units 22a. A similar function, however, can be achieved by closure of the DC electrical connectors 24 on the connecting lines between the first APS units 22a and their respective first DC links. In this case, any internal APS contactors of the first 22a and second 22b APS units are kept closed allowing these DC electrical connectors 24 to act as APS contactors managing connecting/disconnecting of the first and second DC-links. Whether the APS contactors are of the internal type or are of external type formed by the DC electrical connectors 24, DC electrical power flows from the second converter-inverter devices associated with the OBESSs 12 to the first converter-inverter devices in the opposite direction to its direction of flow in the other drive modes. Thus the first DC links are maintained at the second DC voltage in the third drive mode, and this DC electrical power is then inverted to three phase AC power by the first inverter circuits 25a to drive the first traction motors 14a. This arrangement allows the OBESSs to provide power to the both the first and second traction motors with little or no additional drive system infrastructure.

However, alternative arrangements may also be possible. For example, the first traction motors 14a may be disabled in the OBESS-only drive mode, or additional inverter circuits may be provided to invert DC electrical power from the OBESSs to AC electrical power in order to directly drive the first traction motors 14a without using the first DC links.

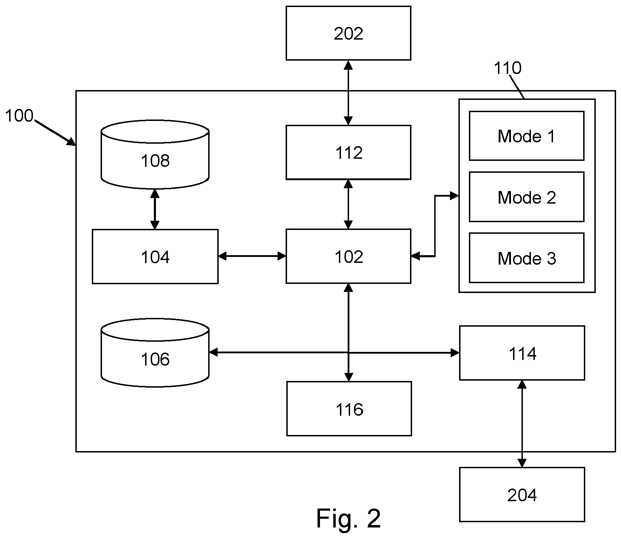

Figure 2 is a schematic diagram showing components of a control system 100 of the train. The control system 100 includes a processor 102, which is connected to each of: a driver assistance system 104, database 106, human-machine interface 110, beacon antenna 112, network adaptor 114, and location determination module 116. The control system 100 is, as has been discussed previously, configured to operate the drive system shown in Figure 1 in each of the three power modes. It does so based on two inputs: a driving setting selection, and an operator specified power mode. The driving setting selection is provided by the driver through interaction with the human-machine interface 110. For example, the human-machine interface 110 may be a touch screen display showing each of the driving setting which can be selected (Setting 1, Setting 2, Setting 3, etc.). The operator specified power mode can be determined several ways.

In one method of determining the operator specified power mode, the processor 102 requests the location of the train from the location determination module 116. The location determination module may, for example, utilise global-positioning system signals to determine the location of the train. This location is then reported to the processor 102. The processor then uses the determined location to look-up in database 106 the operator specified power mode associated with the region or zone the train has now entered.

In another method of determining the operator specified power mode, the processor 102 is provided with a beacon signal via beacon antenna 112 which is configured to receive signals from one or more beacons 202 located along the railway. This beacon signal can, in some examples, include the operator specified power mode. In other examples, the beacon signal may include a beacon identifier. The processor 102 can then use this beacon identifier to look-up in database 106 a corresponding operator specified power mode.

In either case, the control system 100 includes a network adaptor 114 which is connectable to a remote control centre 204. This remote control centre can provide updates or revisions to the database 106. For example, further points can be specified in the railway network, or existing points can be modified.

Once the control system 100 has obtained both the driving setting selection and the operator specified power mode, it determines whether or not to change the power mode of the drive system. Where the control system has received a first driving selection mode, for example a 'normal' driving setting selection mode, it will operate the drive system in the power mode defined by the operator specified power mode. That is, the power mode to be used is determined in response to both the current zone information in which the vehicle is travelling and the power resource information associated with the detected zone (which can be retrieve as discussed above). Therefore, the driver may have (before entering a zone associated with an operator selected power mode) is select a driving setting which will be applied when passing through the, and subsequent, zones. The control system will then switch the power mode at the boundary of zones if needed, without manual control. Where the control system has received a second driving selection mode, for example an 'economic' (or 'eco') driving selection mode, it will operate the drive system in battery-only mode as much as possible. This can be implemented by, for example, increasing a distance which is used to define the region or zones. Where the control system has received a third driving selection mode, for example a 'fast' driving selection mode, and the operator specified power mode has been predetermined by either information received from a beacon or a database located in the control system, it will ignore the operator specified power mode and operate the drive system in the hybrid mode where overhead power is not available. Where the operator specified power mode is derived based on the selected driving setting (see below, with reference to Tables 2 and 3), and the selected driving setting is 'fast', the operator specified power mode would be derived as the one which provides the most power to the train (e.g. hybrid where there is no overhead power).

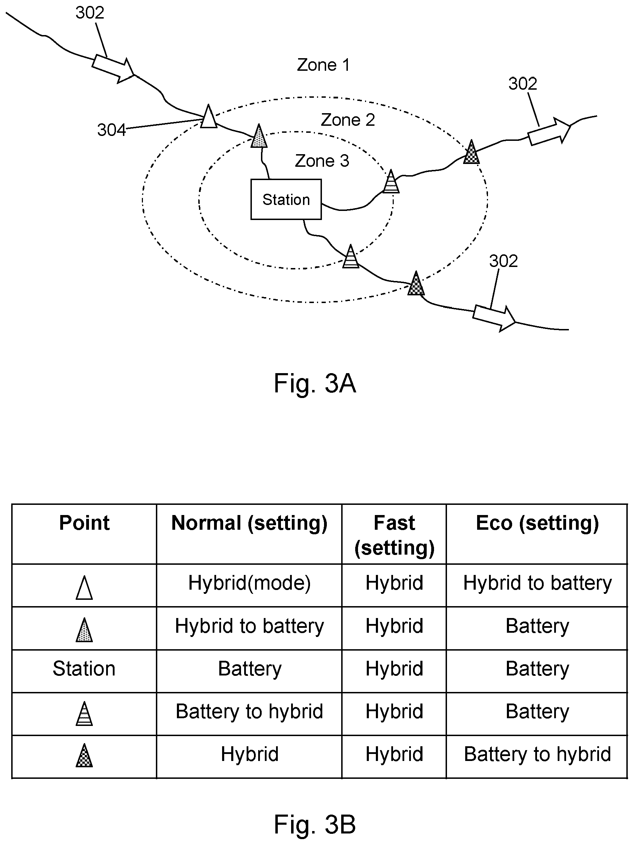

Figure 3A is a schematic diagram of a railway network illustrating this relationship between power mode and zone where zones are defined in a two-dimensional manner. The railway network in this example is not electrified (i.e. it has no external power supply infrastructure) and is traversed by a train in the direction indicated by arrows 302. That is, the train approaches the station before departing along one of two possible routes. In doing so, the train traverses a first zone (Zone 1) before entering a second zone (Zone 2) at a first point 304. Before entering Zone 2 (that is, during transit across zone 1), the control system 100 of the train determines both the driving setting selection and the operator specified power mode associated with this zone. Where the driving setting has not been selected, the control system will prompt the driver (e.g. via human-machine interface 110) to select a driving setting. Where no driving setting is selected, a default may be applied (e.g. 'normal').

The control system then determines which power mode to operate the drive system in based on the driving setting selection and the operator specified power mode associated with this zone. Figure 3B is a table describing the switchover patterns for a train as a result of the determination of the control system. For example, when the train passes point 204 and the driving setting selection is normal or fast the train continues to operate in the hybrid mode. Whereas where the driving setting selection is eco the control system changes the power mode from hybrid to battery-only (battery-only being the operator defined power mode). Similarly, when the train reaches point 206, the control system will change the power mode from hybrid to battery-only when the driving setting selection is `normal' but retain it in the hybrid power mode where the driving setting selection is 'fast'.

Table 1 below illustrates example contents of the database 106 corresponding to the scenario described above:

**Table 1**

| Setting | Zone (previous) | Zone (current) | Switchover pattern |
|---|---|---|---|
| 1 | 1 | 2 | Hybrid |
| 1 | 2 | 1 | Hybrid |
| 1 | 2 | 3 | Hybrid to battery |
| 1 | 3 | 2 | Battery to hybrid |
| 2 | 1 | 2 | Hybrid |
| 2 | 2 | 1 | Hybrid |
| 2 | 2 | 3 | Hybrid |
| 2 | 3 | 2 | Hybrid |
| 3 | 1 | 2 | Hybrid to battery |
| 3 | 2 | 1 | Battery to hybrid |
| 3 | 2 | 3 | Battery |
| 3 | 3 | 2 | Battery |

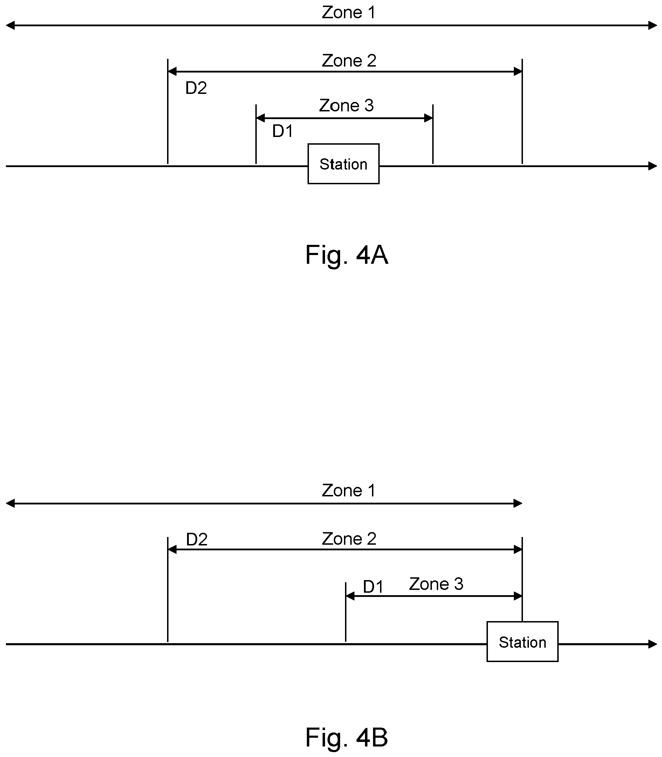

Figures 4A and 4B are schematic diagrams of a railway network illustrating the relationship between power mode and zone where zones are defined in a one-dimensional manner in contrast to Figure 3A. In Figure 4A, the zones are defined as distances from a point e.g. the station. Zone 3 is defined as beginning a distance D1 from the station, in either direction (upstream or downstream), whereas Zone 2 is defined as beginning a distance D2 from the station (D2 being double D1) in either direction, and not including the portion defined as Zone 3. Zone 1 is defined as the portion of the railway network not included in either Zone 2 or Zone 3. In the example of Figure 4A the route the train will take passes through the station and then onwards past it. Whereas the route in Figure 4B will take the train to the station, and then back the way it came. In such a route, the zones will be defined only as a distance from the station in one direction (instead of both directions, as in Figure 4A).

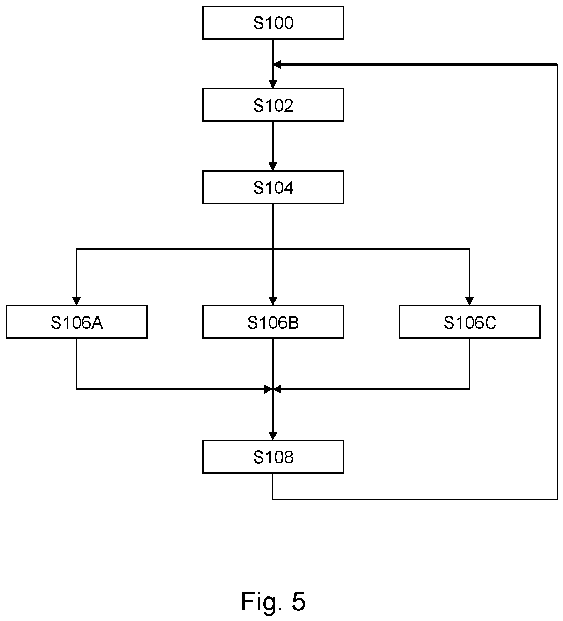

Figure 5 is a flow diagram illustrating a method according to the present invention. The method begins in step S100, where the driving setting selection is 'Normal'. Referring to the scenario shown in Figures 3A, 4A and 4B, the train is within Zone 1 at this stage. Next, in step S102, the human-machine interface prompts the driver to select a driving setting as discussed previously. The method then moves to step S104 upon one of the following conditions: (i) the driver has provided a selection through the human-machine interface; (ii) a timeout has expired (e.g. the driver does not provide an input within 30 seconds); or (iii) a beacon is detected via the beacon identifier. At step S104, the prompting of a selection from the driver is terminated and further inputs from the driver may be rejected. The method then moves to one of steps S106A, S106B, or S106C if the driving setting selection was normal, fast, or eco respectively.

The method moves to step S108 when one of the following conditions has been met: (i) the train's journey has ended (e.g. as defined by timetable); (ii) the train as stopped at a station; (iii) a new driver has been registered with the system (e.g. the driver of the train has changed); or (iv) the train has passed through the current zone and into the next. In step S108, the human-machine interface is reset so as to be able to receive a new input from the driver. Once the reset has been completed, the method returns to step S102.

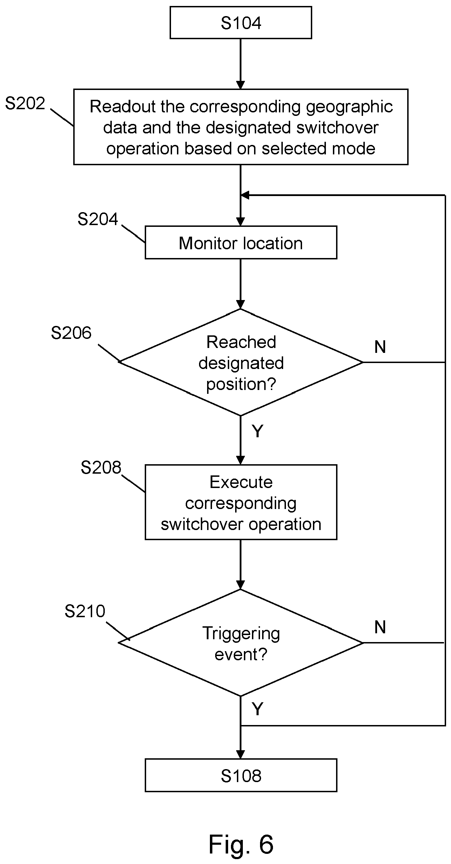

Figure 6 is a flow-diagram illustrating in more detail steps of the method of Figure 5. After step S104, step S202 is performed where the corresponding geographic data is read out as well as the designated switchover operation based on the selected driving setting. This can be done as discussed previously, e.g. through use of a database or in response to receiving a beacon signal. The method moves to step S204 where the location is monitored and subsequently checked in step S206 against a designated position. If the train has reached the designated position, 'Y', the method moves to step S208 and the corresponding switchover operation is executed. If the train has not reached the designated position, `N', the method loops back to step S204 and the location is monitored again.

After the corresponding switchover operation has been executed, the method moves to step S210 where it is determined if a triggering event is detected. If it has, Y', the method moves to step S108. If not, `N', the method loops back to step S204. In some examples, if the determination is negative, `N', the method may loop directly back to step S210. In some examples, there may be a reason why the train has not switched over. For example the state of charge of the battery may be empty, or too low, which may cause the train to ignore requests to move into battery-only mode.

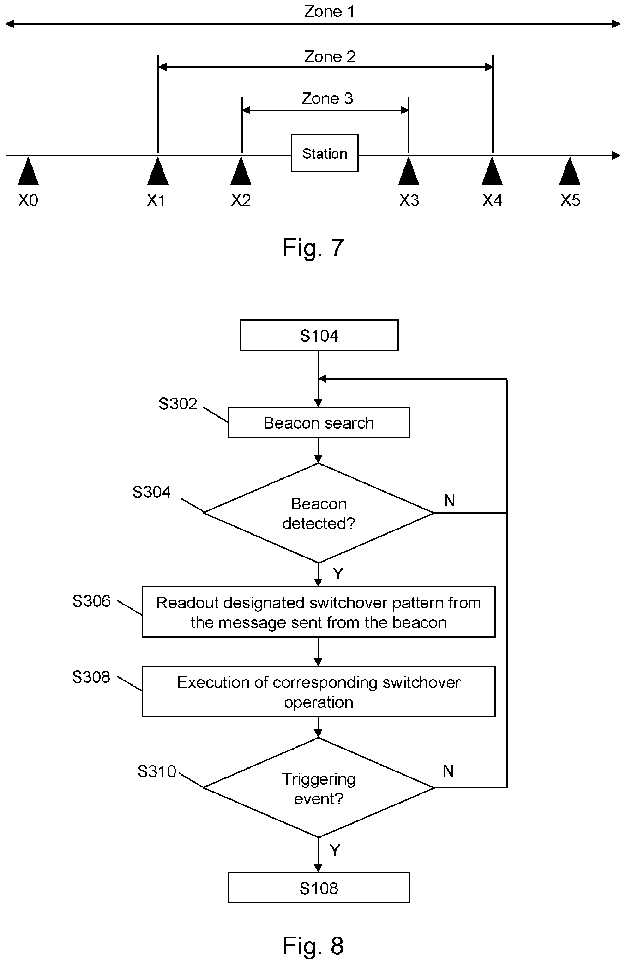

Figure 7 is a schematic of a railway network illustrating the relationship between power mode and zone where the zones are defined by beacons installed along the railway network. In Figure 7, beacons X0 - X5 are provided along the track and broadcast signals to trains passing them. When the train passes, it receives a signal from the respective beacon which (as discussed previously) can either specify an operator specified power mode or can just recite a beacon identifier to be used to look up the operator specified power mode in a database in the control system. Table 2 shows an example of data transmitted from the beacon to the train where the beacons also include information relating to the selected driving setting (in contrast to examples where the beacons merely specify an operator specified driving mode), and table 3 shows the corresponding on-board database:

**Table 2**

| Beacon ID | Direction | Related settings | Operation |
|---|---|---|---|
| X0 | Left to right | All | Close HMI |
| X1 | Left to right | 3 | If the driving setting is "3", switchover from hybrid to battery |
| X2 | Left to right | 1 | Switchover from hybrid to battery |
| X3 | Left to right | 1 | Switchover from battery to hybrid |
| X4 | Left to right | 3 | If the driving setting is "3", switchover from battery to hybrid |
| X5 | Left to right | All | Reset the HMI |

**Table 3**

| Setting | Switchover pattern |
|---|---|
| 1 | Hybrid to Battery |
| | Battery to Hybrid |
| 2 | Hybrid |
| 3 | Hybrid to Battery |
| | Battery to Hybrid |

Figure 8 is a flow-diagram illustrating a variation of the method of Figure 6, applicable when beacons provided as per Figure 7. Starting from S104, the method moves to step S302 where the beacon antenna searches for a beacon. A determination is periodically made in step S304 as to whether a beacon has been detected. If so, 'Y', the method moves to step S306. If not, `N', the method returns to step S302 and the beacon search continues.

In step S306, the designated switchover pattern is readout (or otherwise determined) from the message sent from the beacon. As discussed before, this can either be directly read from the message sent from the beacon or it can be determined with reference to a database and the beacon identifier. Once the designated switchover pattern has been read out, the method moves to step S308 where the corresponding switchover operation is executed. The method then moves to step S310 where it is determined if a triggering event is detected. If it has, Y', the method moves to step S108. If not, `N', the method loops back to step S302.

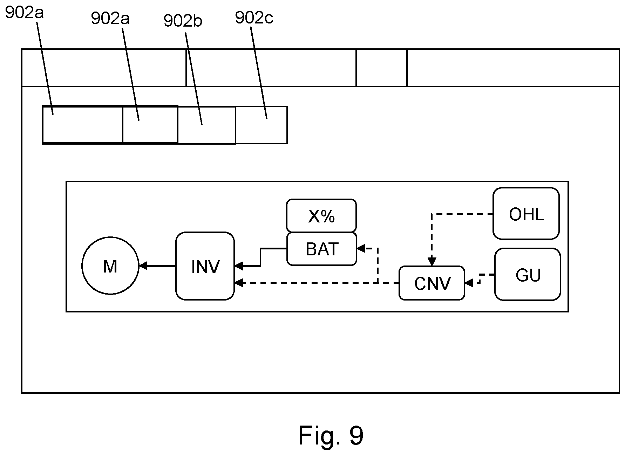

Figure 9 is an example of an interface for the driver assistance system. The interface shows the current power mode of the driving system (in this case battery only, as indicated by the solid lines). It also shows the selection for the driving setting: eco, normal, or fast by providing one or more buttons 902a - 902c. Status indicators 904 can report to the driver the current power mode in use (e.g. hybrid, overhead, or battery only). The interface also displays the other power modes: overhead line (OHL), and hybrid (GU, corresponding to generator unit). These connect via converter (CNV) to the batteries (BAT) and an inverter (INV) which provides electrical power to one of more traction motors (M) as discussed in detail above. The dashed lines indicate they are currently not in use. Further, the current state of charge (X%) of the batteries are displayed.

The processor 102 is also configured to calculate, using a database 108 storing journey information, the time difference between a planned time (e.g. scheduled time) for arrival at the next stop and the actual time the train is due to arrive at the next step. Where the difference between the actual time and planned time is small (e.g. less than 5 minutes, less than 3 minutes, or less than 1 minute) the processor may recommend to the driver (via the human-machine interface) that the driver select the normal driving setting. Where the difference between the actual time and the planned time is large (e.g. greater than 5 minutes) the processor may recommend to the driver that the driver select the fast driving setting. In addition, if the vehicle has an automatic operation system, the DAS may communicate with a supervising unit about those recommendation of setting and the supervising system can set the suitable mode automatically. Various parameters associated with the train may be displayed on the interface, such as destination, time to destination, scheduled time, current speed, current time, and/or any system alerts or warnings for the driver.

The processor 102 may also store data relating to the driving setting selected by the driver. This can be stored in database 106, or transmitted to the remote control centre 204. The data may indicate, for example, which driving setting was selected at a given time. It may also include information identifying: the driver's ID, the train's ID, route information associated with the train, and/or a number of passengers on the train.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A train for travelling on a railway network including routes with external power supply infrastructure and on routes without external power supply infrastructure, the train including a control system configured to operate a drive system of the train in each of two power modes:
a hybrid mode in which power is drawn from an on-board generator assisted by one or more on-board electrical storage systems, and
a battery-only mode where power is drawn only from the one or more on-board electrical storage systems,
wherein the control system is configured to receive both:
a driving setting selection, and
an operator specified power mode selected from the two power modes, associated with a respective region of the railway network ,
and whilst the train is in the respective region the control system is configured to modify one or more parameters associated with the operator specified power mode, or to change from or ignore the operator specified power mode, based on the driving setting selection.

2. The train of claim 1, wherein whilst the train is in the respective region the control system is configured:
in response to receiving a normal driving setting selection, to operate the drive system according to the operator specified power mode;
in response to receiving an economical driving setting selection, to increase the size of the respective region when the operator specified power mode is the battery-only mode; and
in response to receiving a fast driving setting selection, to reduce the size of the respective region when the operator specified power mode is the battery-only mode.

3. The train of any preceding claim, wherein the control system of the train includes a database, the database containing data defining regions of the railway network in which the drive system should operate in a given operator specified power mode.

4. The train of claim 3, wherein the control system of the train includes a location determination module configured to determine the location of the train, and the control system is configured to look-up the location in the database to identify the given operator specified power mode.

5. The train of any of either claim 3 or 4, wherein the control system is configured to connect to a remote control centre and to receive, from the remote control centre, data defining further regions of the railway network in which the drive system should operate in a given operator specified power mode.

6. The train of any preceding claim, wherein the train includes an antenna, configured to communicate with one or more beacons located along the railway network, and to derive from signals received from the or each beacon an operator specified power mode for a given region of the railway network.

7. The train of claim 6, wherein the signal(s) received from the or each beacon includes a beacon identifier, and the control system is configured to look-up the received beacon identifier in a database to derive the operator specified power mode for the given region of the railway network.

8. The train of claim 6, wherein the signal(s) received from the or each beacon includes the operator specified power mode for the given region of the railway network.

9. The train of any preceding claim, wherein the control system further includes a driver assistance system, configured to provide operating data indicating an estimated schedule of the train to the driver calculated based on the driving setting selection.

10. The train of claim 9, wherein the driver assistance system is configured to recommend a given driving setting selection to the driver based on the estimated schedule of the train.

11. The train of any preceding claim, wherein the control system further includes a recording module, configured to store the driving setting selected by the driver of the train.

12. The train of any preceding claim, wherein the control system is configured to reset the driving setting selection when either:
the train is stopped at a station; or
the driver is changed.

13. A method of operating a train on a railway network including routes with external power supply infrastructure and on routes without external power supply infrastructure, the train including a control system configured to operate a drive system of the train in each of two power modes:
a hybrid mode in which power is drawn from an on-board generator assisted by one or more on-board electrical storage systems, and
a battery-only mode where power is drawn only from the one or more on-board electrical storage systems,
the method including steps of:
receiving, by the control system both:
a driving setting selection, and
an operator specified power mode selected from the two power modes, associated with a respective region of the railway network ,
and, whilst the train is in the respective region the control system is configured to modify one or more parameters associated with the operator specified power mode, or to change from or ignore the operator specified power mode, based on the driving setting selection.

14. The method of claim 13, wherein:
in response to receiving a normal driving setting selection, operating the drive system according to the operator specified power mode;
in response to receiving an economical driving setting selection, increasing the size of the respective region when the operator specified power mode is the battery-only mode; and
in response to receiving a fast driving setting selection, reducing the size of the respective region when the operator specified power mode is the battery-only mode
